(19) **Europäisches Patentamt**

**European Patent Office**

**Office européen des brevets**

(11) **EP 1 464 665 B1**

(12) **EUROPÄISCHE PATENTSCHRIFT**

(45) Veröffentlichungstag und Bekanntmachung des Hinweises auf die Patenterteilung:
**26.07.2006 Patentblatt 2006/30**

(51) Int Cl.:
*C08J 3/12* (2006.01)          *C08K 3/22* (2006.01)
*B29B 13/06* (2006.01)

(21) Anmeldenummer: **04006748.0**

(22) Anmeldetag: **20.03.2004**

(54) **Verfahren zur Herstellung von gut in Wasser redispergierbaren und mit Wasser benetzbaren Polymerisatpulvern**

Process for preparing polymerizate powders with good redispersion and wettability in water

Procédé pour le préparation des poudres polymériques avec bonne rédispersibilité et bonne mouillabilité dans l'eau

(84) Benannte Vertragsstaaten:
**AT BE BG CH CY CZ DE DK EE ES FI FR GB GR HU IE IT LI LU MC NL PL PT RO SE SI SK TR**

(30) Priorität: **03.04.2003 DE 10315433**

(43) Veröffentlichungstag der Anmeldung:
**06.10.2004 Patentblatt 2004/41**

(73) Patentinhaber: **BASF Aktiengesellschaft**
**67056 Ludwigshafen (DE)**

(72) Erfinder:
• **Pakusch, Joachim, Dr.**
  **67346 Speyer (DE)**
• **Pietsch, Ines, Dr.**
  **67346 Speyer (DE)**
• **Denu, Hans-Jürgen**
  **67159 Friedelsheim (DE)**
• **Sack, Heinrich**
  **67454 Hassloch (DE)**
• **Reck, Bernd, Dr.**
  **67269 Grünstadt (DE)**

(56) Entgegenhaltungen:
**EP-A- 1 000 113          DE-A- 19 542 442**
**DE-A- 19 711 712**

**Beschreibung**

Die vorliegende Erfindung betrifft ein Verfahren zur Herstellung eines gut in Wasser redispergierbaren und mit Wasser benetzbaren Polymerisatpulvers durch Sprühtrocknung einer wässrigen Dispersion von Polymerisatpartikeln unter Zumischen eines hydrophilen und eines hydrophoben Antiblockmittels, welches dadurch gekennzeichnet ist, dass die Sprühtrocknung der wässrigen Polymerisatpartikeldispersion in Anwesenheit eines hydrophoben Antiblockmittels erfolgt und das dabei erhaltene Polymerisatpulver in einem nachfolgenden Schritt homogen mit einem hydrophilen Antiblockmittel gemischt wird.

In vielen Anwendungsbereichen werden Polymerisate benötigt, welche sich in einfacher Weise in ein wässriges Medium einarbeiten lassen. Hierzu eignen sich in vielen Fällen wässrige Dispersionen von Polymerisatpartikeln (wässrige Polymerisatdispersionen), welche sich häufig direkt einsetzen lassen. Nachteilig an wässrigen Polymerisatdispersionen ist jedoch, dass sie mit einem Wassergehalt von bis zu 60 Gew.-% bei der Lagerung große Volumina benötigen und bei der Abgabe an den Kunden neben dem gewünschten Polymerisat auch überall günstig verfügbares Wasser kostenaufwendig transportiert werden muss.

Dieses Problem wird häufig dadurch gelöst, dass die wässrigen Polymerisatdispersionen, welche u.a. durch eine dem Fachmann geläufige radikalisch initiierte wässrige Emulsionspolymerisation zugänglich sind, einem dem Fachmann ebenfalls geläufigen Sprühtrocknungsprozess zur Herstellung entsprechender Polymerisatpulver unterwirft.

Bei der Verwendung dieser Polymerisatpulver, beispielsweise als Bindemittel in Klebstoffen, Dichtmassen, Kunstharzputzen, Papierstreichmassen, Anstrichmitteln sowie sonstigen Beschichtungsmitteln oder als Additive in mineralischen Bindemitteln, müssen die Polymerisatpulver in der Regel wieder in Wasser redispergiert werden. Dies kann entweder dadurch geschehen, dass das Polymerisatpulver in Wasser redispergiert wird und die erhaltene wässrige Polymerisatdispersion zur Mischung mit den anderen Formulierungsbestandteilen verwendet wird oder dadurch, dass das Polymerisatpulver gemeinsam mit den anderen Formulierungsbestandteilen mit Wasser gemischt wird. Dabei kommt es in beiden Fällen darauf an, dass das Polymerisatpulver beim Inkontaktbringen mit Wasser rasch und ohne Ausbildung von Agglomeraten wieder die ursprünglichen Polymerisatpartikel ausbildet. Die Grundlage hierfür ist das sogenannte "instant"-Verhalten des eingesetzten Polymerisatpulvers in Wasser, welches sich aus dem Redispergier- und dem Benetzungsverhalten des Polymerisatpulvers zusammensetzt.

Das Redispergierverhalten ist eine wichtige Eigenschaft für die Güte des Polymerisatpulvers. Je besser das Redispergierverhalten eines Polymerisatpulvers in Wasser ist, um so mehr nähern sich die Eigenschaften der wässrigen Polymerisatdispersion nach der Redispergierung den Eigenschaften der wässrigen Polymerisatdispersion vor dem Sprühtrocknungsschritt an. Mit anderen Worten, das Redispergierverhalten des Polymerisatpulvers ist ein Maß dafür, in welchem Ausmaß die ursprüngliche und die redispergierte wässrige Polymerisatdispersion in ihren Eigenschaften übereinstimmen.

Weist das Polymerisatpulver darüber hinaus auch noch ein gutes Benetzungsverhalten auf, so kann bei der Redispergierung die Ausbildung der wässrigen Polymerisatdispersion auch ohne den Einsatz einer intensiven Mischtechnik erfolgen, was in der Praxis Vorteile bietet.

Während das Redispergierverhalten eines Polymerisatpulvers in der Regel im wesentlichen von den beim Sprühtrocknungsprozess üblicherweise eingesetzten und dem Fachmann daher geläufigen Sprühhilfsmitteln beeinflusst wird, wird das Benetzungsverhalten durch die Oberflächenbeschaffenheit des Polymerisatpulverkorns bestimmt. Diese wird häufig durch das auf der Oberfläche des Polymerisatpulverkorns anhaftende, sogenannte Antiblockmittel bestimmt.

Als Antiblockmittel werden in der DE-OS 2614261 beispielsweise hochdisperse Kieselsäuren offenbart, welche in Mengen von 4 bis 20 Gew.-%, bezogen auf das Polyvinylacetat/Ethylen-Copolymere eingesetzt werden. So hergestellte Pulver weisen aber einen hohen Feinanteil auf und neigen daher zum Stauben. Weiterhin neigen diese Polymerisatpulver beim Einbringen in Wasser zu einer Klumpenbildung, welche nur durch einen intensiven Mischvorgang behoben werden kann.

Die DE-OS 2614261 beschreibt in einem ähnlichen Verfahren den Einsatz von 2 bis 20 Gew.-% Kieselsäure als Antiblockmittel für Polyvinylacetat und andere Copolymere des Vinylacetats. Auch hier gelten die vorgenannten Nachteile.

In der DE-OS 1719317 werden als Blockmittel Aluminiumsilikate, Kieselgur, Tone, Leichtspat, Zemente oder Diatomeenerde offenbart, welche dem Polymerisatpulver im Anschluss an den Sprühtrocknungsprozess zugemischt werden, wobei auch hier die vorgenannten Nachteile zum Tragen kommen.

Die DE-OS-1954442 offenbart ein Verfahren zur Herstellung von in Wasser redispergierbaren. Organosilizium verbindungen enthaltenden Polymerzusammensetzungen durch Sprühtrocknung , wobei ein Teil eines Antiblockmittels gleichzeitig mit dem wässrigen Gemisch in einen Trocknen eingespeist wird, während die Restmange dem getrockneten Pulverstrom zugeführt wird, solange dieser noch im Gasstrom suspendiert ist, oder die Restmenge dem getrockneten Pulver zugemiecht wird.

Durch Reaktion mit Chlorsilan hydrophobierte Kieselsäuren werden in der DE-A 3101413 als vorteilhafte Antiblockmittel bei der Herstellung von Vinylesterpulvern offenbart.

In der EP-A 1000113 wird ein Verfahren zur Herstellung von redispergierbaren und benetzbaren Polymerisatpulvern beschrieben, bei welchem zur Sprühtrocknung gleichzeitig ein hydrophiles und ein hydrophobes Antiblockmittel eingesetzt werden soll. Dieses Verfahren soll die vorgenannten Nachteile nicht aufweisen. Nachteilig an diesem Verfahren ist jedoch, dass während des Sprühtrockenprozesses große Menge an Antiblockmittel zugeführt werden, was aufgrund der Feinteiligkeit der eingesetzten Antiblockmittel häufig zu Abscheidungen oder zu Verstopfungen der Abluftleitungen bzw. Abscheidezyklonen oder Abluftfiltern führt, mit der Folge, dass der Sprühtrocknungsprozess störanfällig ist.

Der vorliegenden Erfindung lag die Aufgabe zugrunde, ein verbessertes Verfahren zur Herstellung von Polymerisatpulvern mit gutem Redispergier- und Benetzungsverhalten in Wasser durch Sprühtrocknung von wässrigen Polymerisatdispersionen zur Verfügung zustellen.

Überraschenderweise wurde nun gefunden, dass die Aufgabe durch das eingangs definierte Verfahren gelöst wird.

Wässrige Polymerisatdispersionen sind allgemein bekannt. Es handelt sich dabei um fluide Systeme, die als disperse Phase in wässrigem Dispergiermedium aus mehreren ineinander verschlungenen Polymerisatketten bestehenden Polymerisatknäuel, die sogenannte Polymermatrix oder Polymerisatpartikel, in disperser Verteilung befindlich enthalten. Der gewichtsmittleren Durchmesser der Polymerisatpartikel liegt häufig im Bereich von 10 bis 1000 nm, oft 50 bis 500 nm oder 100 bis 300 nm.

Wässrige Polymerisatdispersionen sind insbesondere durch radikalisch initiierte wässrige Emulsionspolymerisation von ethylenisch ungesättigten Monomeren zugänglich. Diese Methode ist vielfach vorbeschrieben und dem Fachmann daher hinreichend bekannt [vgl. z.B. Encyclopedia of Polymer Science and Engineering, Vol. 8, Seiten 659 bis 677, John Wiley & Sons, Inc., 1987; D.C. Blackley, Emulsion Polymerisation, Seiten 155 bis 465, Applied Science Publishers, Ltd., Essex, 1975; D.C. Blackley, Polymer Latices, 2$^{nd}$ Edition, Vol. 1, Seiten 33 bis 415, Chapman & Hall, 1997; H. Warson, The Applications of Synthetic Resin Emulsions, Seiten 49 bis 244, Ernest Benn, Ltd., London, 1972; D. Diederich, Chemie in unserer Zeit 1990, 24, Seiten 135 bis 142, Verlag Chemie, Weinheim; J. Piirma,. Emulsion Polymerisation, Seiten 1 bis 287, Academic Press, 1982; F. Hölscher, Dispersionen synthetischer Hochpolymerer, Seiten 1 bis 160, Springer-Verlag, Berlin, 1969 und die Patentschrift DE-A 40 03 422]. Die radikalisch initiierte wässrige Emulsionspolymerisation erfolgt üblicherweise so, dass man die ethylenisch ungesättigten Monomeren, häufig unter Mitverwendung von Dispergierhilfsmitteln, in wässrigem Medium dispers verteilt und mittels wenigstens eines radikalischen Polymerisationsinitiators polymerisiert. Häufig werden bei den erhaltenen wässrigen Polymerisatdispersionen die Restgehalte an nicht umgesetzten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise bakterizide oder schaumdämpfende Additive zugesetzt.

Das erfindungsgemäße Verfahren lässt sich insbesondere mit wässrigen Polymerisatdispersionen durchführen, deren Polymerisatpartikel

| | |
|---|---|
| 50 bis 99,9 Gew.-% | Ester der Acryl- und/oder Methacrylsäure mit 1 bis 12 C-Atome aufweisenden Alkanolen und/ oder Styrol, oder |
| 50 bis 99,9 Gew.-% | Styrol und/oder Butadien, oder |
| 50 bis 99,9 Gew.-% | Vinylchlorid und/oder Vinylidenchlorid, oder |
| 40 bis 99,9 Gew.-% | Vinylacetat, Vinylpropionat, Vinylester der Versaticsäure, Vinylester langkettiger Fettsäuren und/oder Ethylen |

in einpolymerisierter Form enthalten.

Insbesondere sind erfindungsgemäß solche wässrigen Polymerisatdispersionen einsetzbar, deren Polymerisate zu

| | |
|---|---|
| - 0,1 bis 5 Gew.-% | wenigstens eine 3 bis 6 C-Atome aufweisende $\alpha,\beta$-monoethylenisch ungesättigte Mono- und/ oder Dicarbonsäure und/oder deren Amid und |
| 50 bis 99,9 Gew.-% | wenigstens ein Ester der Acryl- und/oder Methacrylsäure mit 1 bis 12 C-Atome aufweisenden Alkanolen und/oder Styrol, oder |
| - 0,1 bis 5 Gew.-% | wenigstens eine 3 bis 6 C-Atome aufweisende $\alpha,\beta$-monoethylenisch ungesättigte Mono- und/ oder Dicarbonsäure und/oder deren Amid und |

(fortgesetzt)

| 50 bis 99,9 Gew.-% | Styrol und/oder Butadien, oder |
|---|---|
| - 0,1 bis 5 Gew.-% | wenigstens eine 3 bis 6 C-Atome aufweisende $\alpha,\beta$-monoethylenisch ungesättigte Mono- und/oder Dicarbonsäure und/oder deren Amid und |
| 50 bis 99,9 Gew.-% | Vinylchlorid und/oder Vinylidenchlorid, oder |
| - 0,1 bis 5 Gew.-% | wenigstens eine 3 bis 6 C-Atome aufweisende $\alpha,\beta$-monoethylenisch ungesättigte Mono- und/oder Dicarbonsäure und/oder deren Amid und |
| 40 bis 99,9 Gew.-% | Vinylacetat, Vinylpropionat, Vinylester der Versaticsäure, Vinylester langkettiger Fettsäuren und/oder Ethylen |

in einpolymerisierter Form enthalten.

Erfindungsgemäß können solche Polymerisate eingesetzt werden, deren Glasübergangstemperatur -60 bis +150 °C, oft -30 bis +100 °C und häufig -20 bis +50 °C beträgt. Mit der Glasübergangstemperatur ($T_g$), ist der Grenzwert der Glasübergangstemperatur gemeint, dem diese gemäß G. Kanig (Kolloid-Zeitschrift & Zeitschrift für Polymere, Bd. 190, Seite 1, Gleichung 1) mit zunehmendem Molekulargewicht zustrebt. Die Glasübergangstemperatur wird nach dem DSC-Verfahren ermittelt (Differential Scanning Calorimetry, 20 K/min, midpoint-Messung, DIN 53 765).

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Encyclopedia of Industrial Chemistry, 5. Aufl., Vol. A21, Seite 169, Verlag Chemie, Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York, 1966; 2nd Ed. J.Wiley, New York, 1975 und 3rd Ed. J. Wiley, New York, 1989.

Bei den Antiblockmitteln handelt es sich in der Regel um Pulver anorganischer Feststoffe, mit einer mittleren Teilchengröße von 0,1 bis 20 $\mu$m und häufig von 1 bis 10 $\mu$m (in Anlehnung an ASTM C 690-1992, Multisizer/100 $\mu$m Kapillare). Günstig ist es, wenn die anorganischen Stoffe in Wasser bei 20 °C eine Löslichkeit $\leq$ 50 g/l, $\leq$ 10 g/l oder $\leq$ 5 g/l aufweisen.

Beispielhaft genannt seien Kieselsäuren, Aluminiumsilikate, Carbonate, wie beispielsweise Calciumcarbonat, Magnesiumcarbonat oder Dolomit, Sulfate, wie beispielsweise Bariumsulfat sowie Talke, Leichtspat, Zemente, Dolomit, Calciumsilikate oder Diatomeenerde. In Frage kommen auch Mischungen vorgenannter Verbindungen, wie beispielsweise Mikroverwachsungen aus Silikaten und Carbonaten.

Abhängig von ihrer Oberflächenbeschaffenheit können die Antiblockmittel hydrophobe (wasserabstoßende) oder hydrophile (wasseranziehende) Eigenschaften aufweisen. Ein Maß für die Hydrophobie bzw. Hydrophilie eines Stoffes ist der Kontaktwinkel eines Tropfens entionisierten Wassers auf einem Presskörper des entsprechenden Antiblockmittels. Dabei ist die Hydrophobie umso größer bzw. die Hydrophilie um so kleiner, je größer der Kontaktwinkel des Wassertropfens auf der Oberfläche des Presskörpers ist und umgekehrt. Zur Entscheidung, ob ein Antiblockmittel hydrophober bzw. hydrophiler ist als ein anderes, werden von beiden Antiblockmitteln einheitliche Siebfraktionen (= gleiche Teilchengrößen oder Teilchengrößenverteilungen) hergestellt. Aus diesen Siebfraktionen gleicher Größen oder Größenverteilungen werden unter identischen Bedingungen (Menge, Fläche, Pressdruck, Temperatur) Presskörper mit waagrechten Oberflächen hergestellt. Mit einer Pipette wird auf jeden Presskörper ein Wassertropfen aufgetragen und unmittelbar danach der Kontaktwinkel zwischen Presskörperoberfläche und Wassertropfen bestimmt. Je größer der Kontaktwinkel zwischen Presskörperoberfläche und Wassertropfen ist, je größer ist die Hydrophobie bzw. desto kleiner ist die Hydrophilie.

Im Rahmen dieser Schrift werden als hydrophile Antiblockmittel alle diejenigen Antiblockmittel verstanden, die hydrophiler sind als die verwendeten hydrophoben Antiblockmittel, d.h. deren Kontaktwinkel kleiner sind als die der beim Sprühprozess eingesetzten hydrophoben Antiblockmittel.

Häufig weisen die hydrophoben Antiblockmittel einen Kontaktwinkel $\geq$ 90 °, $\geq$ 100 ° oder $\geq$ 110 ° auf, während die hydrophilen Antiblockmittel einen Kontaktwinkel < 90 °, $\leq$ 80 ° oder $\leq$ 70 ° aufweisen. Günstig ist es, wenn sich die Kontaktwinkel der eingesetzten hydrophoben und hydrophilen Antiblockmittel um $\geq$ 10 °, $\geq$ 20 °, $\geq$ 30 °, $\geq$ 40 °, $\geq$ 50 °, $\geq$

60 °, ≥ 70 °, ≥ 80 ° oder ≥ 90 ° unterscheiden.

Als hydrophile Antiblockmittel werden beispielsweise Kieselsäuren, Quarz, Dolomit, Calciumcarbonat, Natrium/ Aluminiumsilikate, Calciumsilikate oder Mikroverwachsungen aus Silikaten und Carbonaten und als hydrophobe Antiblockmittel beispielsweise Talk (Magensiumhydrosilikat mit Schichtstruktur), Chlorit (Magnesium/Aluminium/Eisenhydrosilikat), mit Organochlorsilanen behandelte Kieselsäuren (DE-A 3101413) oder allgemein hydrophile Antiblockmittel, welche mit hydrophoben Verbindungen beschichtet sind, wie beispielsweise gefälltes Calciumcarbonat beschichtet mit Calciumstearat, verwendet.

Verfahrenswesentlich ist, dass pro 100 Gew.-Teilen des in der wässrigen Polymerisatdispersion enthaltenen Polymerisats 0,001 bis 10 Gew.-Teile sowie oft 0,1 bis 1 Gew.-Teile hydrophobes Antiblockmittel und 0,01 bis 30 Gew.-Teile sowie oft 1 bis 10 Gew.-Teile hydrophiles Antiblockmittel eingesetzt werden. Von besonderem Vorteil ist es, wenn das Mengenverhältnis des hydrophoben Antiblockmittels zum hydrophilen Antiblockmittels 0,001 bis 0,25 : 1 oder 0,004 bis 0,08 : 1 beträgt.

Optimale Ergebnisse werden erhalten, wenn wässrige Polymerisatdispersionen mit einer gewichtsmittleren Teilchengröße von 100 bis 1000 nm, oft von 100 bis 500 nm eingesetzt werden und das Verhältnis des mittleren Polymerisatpulverdurchmessers (nach der Sprühtrocknung häufig 30 bis 150 $\mu$m, oft 50 bis 100 $\mu$m, bestimmt in Anlehnung an ASTM C 690-1992, Multisizer/100 $\mu$m Kapillare) zum mittleren Teilchendurchmesser der hydrophoben sowie hydrophilen Antiblockmittel 2 bis 50 : 1 oder 5 bis 30 : 1 beträgt.

Die dem Fachmann bekannte Sprühtrocknung erfolgt in einem Trocknungsturm mit Hilfe von Zerstäubungsscheiben oder Ein- oder Zweistoffdüsen im Kopf des Turms. Die Trocknung der wässrigen Polymerisatdispersion wird mit einem heißen Gas, beispielsweise Stickstoff oder Luft, durchgeführt, das von unten oder oben, bevorzugt jedoch im Gleichstrom mit dem Trocknungsgut von oben in den Turm geblasen wird. Die Temperatur des Trockungsgases beträgt am Turmeingang etwa 90 bis 180 °C, vorzugsweise 110 bis 160 °C und am Turmausgang etwa 50 bis 90 °C, bevorzugt 60 bis 80 °C. Das hydrophobe Antiblockmittel wird gleichzeitig mit der wässrigen Polymerisatdispersion, aber räumlich davon getrennt in den Trocknungsturm eingegeben. Die Zugabe erfolgt beispielsweise über eine Zweistoffdüse oder Förderschnecke, im Gemisch mit dem Trocknungsgas oder über eine separate Öffnung.

Das aus dem Trocknungsturm ausgeschleuste Polymerisatpulver wird auf 20 bis 30 °C abgekühlt und in handelsüblichen Mischern, wie beispielsweise einem Nautamischer, wie er von zahlreichen Firmen angeboten wird, mit dem hydrophilen Antiblockmittel abgemischt.

Die erfindungsgemäß erhaltenen Polymerisatpulver zeigen eine sehr gute Lagerstabilität und Rieselfähigkeit. Sie sind staubarm und lassen sich in einfacher Weise ohne hohen Mischaufwand in Wasser redispergieren. Die erhaltenen Polymerisatpulver eignen sich insbesondere zum Einsatz als Bindemittel in Klebstoffen, Dichtmassen, Kunstharzputzen, Papierstreichmassen, Anstrichmittel sowie sonstigen Beschichtungsmitteln oder als Additive in mineralischen Bindemitteln.

Beispiele

1. Herstellung einer wässrigen Polymerisatdispersion D1

Ein Gemisch aus

| | |
|---|---|
| 150,0 g | entionisiertem Wasser |
| 5,6 g | einer 20 gew.-%igen wässrigen Lösung eines ethoxylierten p-Isooctylphenols (EO-Grad 25), |
| 0,5 g | einer 35 gew.-%igen wässrigen Lösung eines Na-Salzes eines sulfatierten und ethoxylierten p-Isooctylphenols (EO-Grad 25), |
| 3,9 g | einer 10 gew.-%igen wässrigen Ameisensäure-Lösung, |
| 1,7 g | Natriumhydrogencarbonat und |
| 3,4 g | einer 20 gew.-%igen wässrigen Polyacrylamid-Lösung |

wurde unter Rühren und Stickstoffatmosphäre auf 90 °C erhitzt. Anschließend wurden zu diesem Gemisch zeitgleich beginnend und unter Aufrechterhaltung der Innentemperatur von 90 °C in 2 Stunden eine wässrige Monomeremulsion, bestehend aus

| | |
|---|---|
| 403,2 g | n-Butylacrylat, |
| 140,0 g | Styrol, |
| 11,2 g | Acrylamid, |
| 5,6 g | Methacrylamid, |

| 8,4 g | einer 20 Gew.-%igen wässrigen Lösung eines ethoxylierten p-Isooctylphenols (EO-Grad 25), |
| 11,5 g | einer 35 gew.-%igen wässrigen Lösung eines Na-Salzes eines sulfatierten und ethoxylierten p-Isooctylphenols (EO-Grad 25) und |
| 162,9 g | entionisiertem Wasser |

und innerhalb von 2,5 Stunden eine Lösung, bestehend aus 3,3 g Natriumperoxodisulfat und 90 g Wasser kontinuierlich zugetropft. Danach wurde das Reaktionsgemisch noch 2 Stunden bei 90 °C gerührt und danach auf 60 °C abgekühlt. Nach Zugabe einer Lösung von 1,1 g tert-Butylhydroperoxid in 5,5 g entionisiertem Wasser wurde bei dieser Temperatur innerhalb von 1 Stunde eine Lösung von 0,6 g Natriumhydroxymethansulfinat in 15 g entionisiertem Wasser zugegeben und anschließend weitere 30 Minuten gerührt. Danach kühlte man auf 20 bis 25 °C (Raumtemperatur) ab und neutralisierte mit 4 g einer 20 gew.-%igen wässrigen Calciumhydroxid-Aufschlämmung. Es wurde eine Polymerisatdispersion mit einem Feststoffgehalt von 55,3 Gew.-%, mit einer Lichtdurchlässigkeit einer 0,01 gew.-%igen Polymerisatdispersion bei 20 °C und einer Schichtdicke von 2,5 cm ("LD-Wert") von 8 % und einem pH-Wert von 8,7 erhalten. Die Glasübergangstemperatur (DSC-midpoint) des Polymerisats betrug -15°C.

Anschließend wurde die wässrige Polymerisatdispersion mit entionisiertem Wasser auf einen Feststoffgehalt von 40 Gew.-% verdünnt.

2. Herstellung eines Sprühhilfsmittels S1

1,20 kg Naphthalin wurden in einem Reaktionsgefäß unter Stickstoff bei 85 °C vorgelegt und unter stetigem Rühren und Kühlen mit 1,18 kg konzentrierter Schwefelsäure (98 Gew.-%) derart versetzt, dass die Innentemperatur stets unter 150 °C lag. Nach beendeter Zugabe ließ man das Reaktionsgemisch 5 Stunden bei 140 bis 150 °C Innentemperatur nachreagieren. Anschließend wurde das Reaktionsgemisch auf 50 °C abgekühlt und unter Einhaltung einer Innentemperatur von 50 bis 55 °C portionsweise mit 0,80 kg einer 30 gew.-%igen wässrigen Formaldehydlösung versetzt. Nach beendeter Zugabe gab man sofort 0,70 kg entionisiertes Wasser hinzu, heizte auf 100 °C auf und ließ 5 Stunden bei dieser Temperatur weiterreagieren. Dann kühlte man auf 65 °C ab und gab solange eine 30 gew.-%igen Calciumhydroxid-Aufschlämmung in entionisiertem Wasser hinzu, bis ein pH-Wert von 8,0 erreicht war. Anschließend filtrierte man die Lösung über ein 200 $\mu$m-Sieb ab und erhielt eine wässrige Lösung S1 mit einem Feststoffgehalt von ca. 35 Gew.-%.

Anschließend wurde die wässrige Lösung des Sprühhilfsmittels S1 auf einen Feststoffgehalt von 20 Gew.-% verdünnt.

3. Sprühtrocknung

Hydrophobes Antiblockmittel

Als hydrophobes Antiblockmittel wurde Sipernat® D 17 der Fa. Degussa eingesetzt. Hierbei handelt es sich um eine Fällungskieselsäure mit einer spezifischen Oberfläche (in Anlehnung an ISO 5794-1, Annex D) von 100 $m^2$/g, einer mittleren Teilchengröße (in Anlehnung an ASTM C 690-1992) von 7 $\mu$m und einer Stampfdichte (in Anlehnung an ISO 787-11) von 150 g/l, deren Oberfläche durch Behandlung mit speziellen Chlorsilanen hydrophobiert wurde.

Hydrophiles Antiblockmittel 1

Als hydrophiles Antiblockmittel 1 wurde eine unbehandelte Fällungskieselsäure mit einer spezifischen Oberfläche (in Anlehnung an ISO 5794-1, Annex D) von 190 $m^2$/g, einer mittleren Teilchengröße (in Anlehnung an ASTM C 690-1992) von 7 $\mu$m und einer Stampfdichte (in Anlehnung an ISO 787-11) von 90 g/l (Sipernat® 22 S der Fa. Degussa) eingesetzt.

Hydrophiles Antiblockmittel 2

Als hydrophiles Antiblockmittel 2 wurde eine feinteilige Verwachsung von weißem Talk mit reinem Dolomit mit einer spezifischen Oberfläche (Blaine 10) von 15900, einer mittleren Teilchengröße (in Anlehnung an ASTM C 690-1992) von 3,5 $\mu$m und einer Stampfdichte (in Anlehnung an ISO 787-11) von 900 g/l (Special Extender Naintsch® SE Super der Fa. Luzenac Naintsch) eingesetzt.

Bestimmung des Kontaktwinkels

10 g des feinpulvrigen Antiblockmittels wurden in einen Metallzylinder mit einem Innendurchmesser von 30 mm und einer Höhe von 20 cm eingefüllt. Anschließend setzte man einen Stempel (Außendurchmesser 29,5 mm) mit einem Gewicht von 5 kg ein und lagerte die Probe 2 Stunden bei Raumtemperatur. Danach wurde der Metallzylinder umgedreht und der ebenflächige, waagerechte Boden des Metallzylinders entfernt, so dass das gepresste Pulver eine waagrechte Oberfläche ausbildete. Mit einer Pipette wurde ein Tropfen Wasser auf die waagrechte Oberfläche des gepressten Pulvers aufgebracht und unmittelbar danach der Kontaktwinkel zwischen waagrechter Presskörperoberfläche und dem Wassertropfen bestimmt. Im Falle des Sipernat® D 17 betrug der Kontaktwinkel > 90 ° und im Falle des Sipernat® 22 S sowie des Special Extender Naintsch® SE Super < 45 °.

Herstellung des sprühgetrockneten Polymerisatpulvers

Die Sprühtrocknung erfolgte in einem Minor-Labortrockner der Fa. GEA Wiegand GmbH (Geschäftsbereich Niro) mit Zweistoffdüsenzerstäubung und Pulverabscheidung in einem Gewebefilter. Die Turmeingangstemperatur des Stickstoffs betrug 130 °C, die Ausgangstemperatur 60 °C. Pro Stunde wurden 2 kg einer Sprühspeise eindosiert.
Die Herstellung der Sprühspeise erfolgte dergestalt, dass auf 5 Gew.-Teile der verdünnten wässrigen Polymerisatdispersion D1 1 Gew.-Teil der verdünnten wässrigen Sprühhilfsmittellösung S1 bei Raumtemperatur zugegeben und unter Rühren homogen vermischt wurden.

Erfindungsgemäße Dispersionspulver 1 und 2

Gleichzeitig mit der Sprühspeise wurden kontinuierlich 0,2 Gew.-% des hydrophoben Antiblockmittels, bezogen auf den Feststoffgehalt der Sprühspeise, über eine gewichtsgesteuerte Doppelschnecke in den Kopf des Sprühturms eindosiert.
Das aus dem Sprühtrockenturm ausgetragene trockene Dispersionspulver wurde in einem Glasgefäß mit 10 Gew.-% des hydrophilen Antiblockmittels 1 bzw. 2, bezogen auf die Pulvermenge, versetzt. Dabei wurde der Glasbehälter zu 50 % seines Volumens befüllt. Anschließend wurde das Pulvergemisch mittels eines Taumelmischers 15 Minuten homogen vermischt.

Vergleichsbeispiel

Die Sprühtrocknung erfolgte gemäß des erfindungsgemäßen Beispiels mit der Ausnahme, dass gleichzeitig mit dem hydrophoben Antiblockmittel auch die Gesamtmenge des hydrophilen Antiblockmittels 1 in den Trockenturm eindosiert wurde.
Doch bereits nach ca. 7 Minuten musste der Sprühspeisedurchsatz auf 500 g pro Stunde gedrosselt werden, da aufgrund des hohen Eintrags an feinteiligen Antiblockmitteln sich die engmaschigen Abscheidefilter zusetzten und die Differenz des Druckes, gemessen vor und nach dem Abscheidefilter stark anstieg. Aufgrund völlig verstopfter Abscheidefilter wurde der Versuch nach ca. 12 Minuten abgebrochen.

4. Beurteilung der sprühgetrockneten Polymerisatpulver

Blockverhalten

10 g der sprühgetrockneten Polymerisatpulver wurden in einen Metallzylinder mit einem Innendurchmesser von 30 mm und einer Höhe von 20 cm eingefüllt. Anschließend setzte man einen Stempel mit einem Außendurchmesser von 29,5 mm, waagrechter Stempelfläche mit einem Gewicht von 5 kg ein und lagerte die Probe 24 Stunden bei Raumtemperatur. Anschließend wurde die gebildete Pulvertablette langsam aus dem Zylinder gedrückt und wie folgt beurteilt:

    Beispiel 1 und 2:       keine Pulvertablette bzw. Pulvertablette ist mit den Fingern nicht aufzunehmen
    Vergleichsbeispiel:    Pulvertablette zerfällt bröckelig

Benetzbarkeit

2 g Polymerisatpulver werden bei Raumemperatur mit einem Spatel aus einer Höhe von 10 cm auf eine Wasseroberfläche von ca. 79 cm$^2$ (800 ml Becherglas) geschüttet und wie folgt beurteilt:

Beispiel 1 und 2: beide Polymerisatpulver spreiten schnell, füllen dabei die gesamte Wasseroberfläche aus und sinken klumpenfrei zu Boden

Vergleichsbeispiel: das Polymerisatpulver spreitet langsam, bildet auf der Wasser-oberfläche kleine Inseln, die sich auch beim Absinken nicht weiter zerteilen

**Patentansprüche**

1. Verfahren zur Herstellung eines gut in Wasser redispergierbaren und mit Wasser benetzbaren Polymerisatpulvers durch Sprühtrocknung einer wässrigen Dispersion von Polymerisatpartikeln unter Zumischen eines hydrophilen und eines hydrophoben Antiblockmittels, **dadurch gekennzeichnet, dass** die Sprühtrocknung der wässrigen Polymerisatpartikeldispersion in Anwesenheit eines hydrophoben Antiblockmittels erfolgt und das dabei erhaltene Polymerisatpulver in einem nachfolgenden Schritt homogen mit einem hydrophilen Antiblockmittel gemischt wird.

2. Verfahren nach Anspruch 1, **dadurch gekennzeichnet, dass** pro 100 Gew.-Teilen Polymerisatpartikel 0,001 bis 10 Gew.-Teile hydrophobes Antiblockmittel und 0,01 bis 30 Gew.-Teile hydrophiles Antiblockmittel eingesetzt werden.

3. Verfahren nach Anspruch 2, **dadurch gekennzeichnet, dass** das Mengenverhältnis des hydrophoben Antiblockmittels zum hydrophilen Antiblockmittels 0,001 bis 0,25 : 1 beträgt.

4. Verfahren nach einem der Ansprüche 1 bis 3, **dadurch gekennzeichnet, dass** die Polymerisatpartikel

50 bis 99,9 Gew.-% Ester der Acryl- und/oder Methacrylsäure mit 1 bis 12 C-Atome aufweisenden Alkanolen und/oder Styrol, oder

50 bis 99,9 Gew.-% Styrol und/oder Butadien, oder

50 bis 99,9 Gew.-% Vinylchlorid und/oder Vinylidenchlorid, oder

40 bis 99,9 Gew.% Vinylacetat, Vinylpropionat, Vinylester der Versaticsäure, Vinylester langkettiger Fettsäuren und/oder Ethylen

in einpolymerisierter Form enthalten.

5. Verfahren nach einem der Ansprüche 1 bis 5, **dadurch gekennzeichnet, dass** das Polymerisat eine Glasübergangstemperatur von -60 bis +150 °C aufweist.

6. Polymerisatpulver erhältlich nach einem Verfahren gemäß einem der Ansprüche 1 bis 5.

7. Verwendung eines Polymerisatpulvers gemäß Anspruch 6 als Bindemittel in Klebstoffen, Dichtmassen, Kunstharzputzen, Papierstreichmassen, Anstrichmitteln sowie sonstigen Beschichtungsmitteln oder als Additiv in mineralischen Bindemitteln.

**Claims**

1. A process for the preparation of a readily water-redispersible and water-wettable polymer powder by spray-drying of an aqueous dispersion of polymer particles with admixing of a hydrophilic and of a hydrophobic antiblocking agent, wherein the spray-drying of the aqueous polymer particle dispersion is carried out in the presence of a hydrophobic antiblocking agent and the polymer powder obtained is homogeneously mixed with a hydrophilic antiblocking agent in a subsequent step.

2. The process according to claim 1, wherein from 0.001 to 10 parts by weight of hydrophobic antiblocking agent and from 0.01 to 30 parts by weight of hydrophilic antiblocking agent are used per 100 parts by weight of polymer particles.

3. The process according to claim 2, wherein the ratio of hydrophobic antiblocking agent to hydrophilic antiblocking agent is from 0.001 to 0.25 : 1.

**4.** The process according to any of claims 1 to 3, wherein the polymer particles comprise

| | |
|---|---|
| from 50 to 99.9% by weight | of esters of acrylic and/or methacrylic acid with alkanols of 1 to 12 carbon atoms and/or styrene, or |
| from 50 to 99.9% by weight | of styrene and/or butadiene, or |
| from 50 to 99.9% by weight | of vinyl chloride and/or vinylidene chloride, or |
| from 40 to 99.9% by weight | of vinyl acetate, vinyl propionate, vinyl esters of versatic acid, vinyl esters of long-chain fatty acids and/or ethylene |

in the form of polymerized units.

**5.** The process according to any of claims 1 to 4, wherein the polymer has a glass transition temperature of from -60 to +150°C.

**6.** A polymer powder obtainable using a process according to any of claims 1 to 5.

**7.** The use of a polymer powder according to claim 6 as a binder in adhesives, sealing compounds, synthetic resin renders, paper coating slips, surface coatings and other coating materials or as an additive in mineral binders.

**Revendications**

**1.** Procédé de préparation d'une poudre de polymère bien redispersible dans l'eau et bien mouillable avec de l'eau par séchage par pulvérisation d'une dispersion aqueuse de particules de polymère avec mélange d'un agent antibloquant hydrophile et d'un agent antibloquant hydrophobe, **caractérisé en ce que** le séchage par pulvérisation de la dispersion aqueuse de particules de polymère a lieu en présence d'un agent antibloquant hydrophobe et la poudre de polymère obtenue est, dans une étape suivante, mélangée de manière homogène avec un agent antibloquant hydrophile.

**2.** Procédé suivant la revendication 1, **caractérisé en ce que**, par 100 parties en poids de particules de polymère, on met en oeuvre 0,001 à 10 parties en poids d'un agent antibloquant hydrophobe et 0,01 à 30 parties en poids d'un agent antibloquant hydrophile.

**3.** Procédé suivant la revendication 2, **caractérisé en ce que** le rapport quantitatif entre l'agent antibloquant hydrophobe et l'agent antibloquant hydrophile est de 0,001 à 0,25/1.

**4.** Procédé suivant l'une des revendications 1 à 3, **caractérisé en ce que** les particules de polymère contiennent, à l'état copolymérisé

| | |
|---|---|
| 50 à 99,9 % | en poids d'ester de l'acide acrylique et/ou méthacrylique avec des alcanols présentant 1 à 12 atomes de C et/ou du styrène, ou |
| 50 à 99,9 | % en poids de styrène et/ou de butadiène, ou |
| 50 à 99,9 % | en poids de chlorure de vinyle et/ou de chlorure de vinylidène, ou |
| 40 à 99,9 % | en poids d'acétate de vinyle, de propionate de vinyle, d'ester vinylique de l'acide Versatic, d'ester vinylique d'acides gras à longue chaîne et/ou d'éthylène. |

**5.** Procédé suivant l'une des revendications 1 à 4, **caractérisé en ce que** le polymère présente une température de transition vitreuse de -60 à +150°C.

**6.** Poudre de polymère qui peut être obtenue selon un procédé suivant l'une des revendications 1 à 5.

**7.** Utilisation d'une poudre de polymère suivant la revendication 6, comme liant dans des colles, des masses d'étanchéification, des enduits en résine synthétique, des masses d'enduction de papier, des produits de peinture ainsi que d'autres produits de revêtement ou comme additif dans des liants minéraux.